# DEMANDE DE BREVET EUROPEEN

(11) **EP 2 131 287 A1**
(43) Date de publication de la demande: **09.12.2009**
(21) Numéro de dépôt: 08290505.0
(22) Date de dépôt: 02.06.2008
(51) Int. Cl.: G06F 13/42

(54) **Dispositif électronique de mise à disposition de services autoadaptatifs en fonction de la plateforme de l'équipement hôte avec lequel il est en liaison**

(71) Demandeur: Gemalto SA, 92190 Meudon (FR)
(72) Inventeur: Durand, Stéphane, 92197 Meudon Cedex (FR)
(74) Mandataire: Cour, Pierre

(57) **Abrégé**

L'invention concerne un dispositif électronique présentant un ou plusieurs services mis à disposition d'un équipement hôte avec lequel il est en liaison. L'invention permet au dispositif d'adapter automatiquement la capacité d'accès aux services mis à disposition en fonction de la plateforme logicielle disponible au sein de l'équipement hôte. L'invention concerne plus particulièrement les dispositifs électroniques de stockage dont la capacité d'accès en lecture/écriture à la mémoire est adaptée en fonction de l'équipement hôte.

## Description

L'invention concerne un dispositif électronique présentant un ou plusieurs services dont la mise à disposition est fonction de l'équipement hôte avec lequel il est en liaison. Plus particulièrement l'invention concerne un dispositif électronique de stockage comportant une mémoire pour contenir des données et/ou au moins un programme ou composant logiciel.

De nombreux dispositifs existent aujourd'hui. Les plus populaires sont des dongles ou clés comportant généralement une mémoire de masse de type Flash. Ils communiquent généralement avec un équipement hôte au moyen du protocole USB (*Universal Serial Bus*). Avec un tel dispositif, l'utilisateur d'un ordinateur portable peut à titre d'exemple, copier ou importer des données. Il peut également procéder à l'installation de composants logiciels pour enrichir le panel de fonctions de son ordinateur.

D'autres dispositifs existent comme les cartes à mémoires par exemple de type MMC (*Multi-Media Card*) ou SD (*Secure Digital*). En outre, il existe des dispositifs tels les cartes à puces dont certaines sont connues sous l'acronyme UICC (*Universal Integrated Circuit Card*). Ces cartes supportent généralement une application de type SIM (*Subscriber Identity Module*) ou plus généralement une application permettant d'identifier un abonné et de définir ainsi les droits de son titulaire pour qu'il puisse bénéficier de services de toute nature. Des disques durs amovibles ou portables permettent également de sauvegarder, partager, déployer des données et des programmes .

D'autres dispositifs comportent un serveur de contenus, tels des pages (écrites par exemple en HTML - *Hypertext Markup Language*) accessibles au moyen d'un navigateur Internet, des programmes à télécharger sur des équipements tels un ordinateur portable.

Par ailleurs, les plateformes hôtes aptes à établir une liaison filaire ou sans fil sont variées. Les ordinateurs portables ou de bureau sont les plus connus. Nous pouvons citer en outre, sans être limitatifs, des terminaux de communication mobiles se connectant à un réseau généralement de type GSM/GPRS (*Global System for Mobile communications* / *General Packet Radio Service*) ou bien des assistants électroniques personnels. La liste des équipements aptes à établir une communication avec un dispositif électronique de stockage pourrait être longue. Outre des structures physiques très hétérogènes, ces équipements nécessitent des plateformes logicielles ou systèmes d'exploitation divers, pour gérer leurs ressources matérielles et logicielles. Par exemple des ordinateurs personnels sont vendus et configurés avec un système d'exploitation « Windows » édité par la société Microsoft. D'autres le sont avec le système d'exploitation « Linux OS » ou bien encore les ordinateurs distribués par la société Apple Computer comportent le système d'exploitation « Mac OS » etc.

La gestion de fichiers textes ou encore multimédia ne pose généralement pas de difficultés. Il est par exemple aisé de copier, depuis une clé USB des photos, documents ou encore vidéos ou bandes sonores émanant d'un ordinateur avec un système « MAC OS » sur un second ordinateur disposant d'un système d'exploitation Windows. Le transfert de logiciels, programmes ou simples composants logiciels est plus problématique. En effet, lesdits programmes ou logiciels sont, pour tout ou partie, dépendants de la plateforme logicielle ou système d'exploitation de l'équipement hôte.

Une application logicielle ne peut fonctionner avec « Windows », « Linux OS » ou « Mac OS » sans adaptations. Pour déployer de telles applications au moyen de dispositifs électroniques de stockage, les éditeurs doivent stocker autant de versions de l'application à déployer qu'il existe de plateformes cibles. Pour faciliter l'action d'un utilisateur désirant installer une application contenue sur un dongle USB, les versions de ladite application sont réparties dans la mémoire de masse du dongle et accessibles au moyen de répertoires. Chaque répertoire est ainsi dédié à un type de plateforme hôte : « Windows », « Linux OS »... Un répertoire contient les différents composants logiciels associés à une version dédiée et un mode opératoire mémorisé à l'aide d'un ou plusieurs documents électroniques.

Après avoir connecté ou mis en liaison son dongle avec un ordinateur, l'utilisateur doit ainsi naviguer au moyen du gestionnaire de fichiers de son ordinateur dans la structure arborescente du plan mémoire du dongle et choisir le répertoire pertinent. Des erreurs fréquentes de sélection sont malheureusement recensées. Une mauvaise sélection rend l'installation inopérante et engendre une grande sollicitation des centres d'appel des éditeurs de logiciels. Une mauvaise manipulation risque d'altérer la configuration logicielle de l'équipement hôte et maximise le mécontentement ou la déception de l'utilisateur maladroit, distrait ou non habitué à composer avec ce type de contraintes technologiques. L'impact commercial est extrêmement négatif en cas de mauvaise sélection ou manipulation de l'usager.

L'invention vise à résoudre les inconvénients de l'art antérieur en offrant une solution simple et transparente pour l'utilisateur. L'invention favorise ainsi le déploiement d'applications logicielles et prévient tout risque de mauvaise manipulation et sélection par l'utilisateur.

A cette fin, il est prévu notamment un dispositif électronique présentant un ou plusieurs services, comportant :
- des moyens de communication pour permettre une liaison avec un équipement hôte ;
- un moyen pour gérer et mettre à disposition de l'équipement hôte, le ou lesdits services;
- un moyen identificateur pour identifier une plateforme logicielle disponible au sein de l'équipement hôte;
- et dans lequel le moyen pour gérer les services adapte automatiquement la capacité d'accès auxdits services depuis l'équipement hôte en fonction de la plateforme identifiée par le moyen identificateur.

Plus particulièrement l'invention prévoit un dispositif électronique comportant une mémoire de masse pour contenir des données et/ou un programme. Le moyen pour gérer les services peut consister en un moyen contrôleur d'accès en lecture et/ou écriture de ladite mémoire apte à adapter automatiquement la capacité d'accès en lecture et/ou écriture à la mémoire depuis l'équipement hôte en fonction de la plateforme identifiée par le moyen identificateur.

Dans un mode de réalisation préféré le moyen identificateur peut faire partie intégrante du moyen pour gérer les services.

Pour identifier la plateforme disponible au sein de l'équipement hôte, le moyen identificateur du dispositif selon l'invention peut exploiter certaines données échangées avec l'équipement hôte, par exemple durant l'initialisation de la communication.

Selon un premier mode de réalisation, les moyens pour gérer les services exploitent une mémoire réservée pour référencer les services autorisés pour une plateforme donnée.

Selon une variante, les moyens pour gérer les services exploitent en outre une mémoire pour lister les services autorisés pour une plateforme donnée. La référence à ladite mémoire est contenue dans la mémoire réservée.

Selon un second mode de réalisation, les moyens pour gérer les services exploitent une mémoire pour lister les services autorisés pour une plateforme donnée, dont le contenu de ladite mémoire est élaboré préalablement par lesdits moyens à partir de données mémorisées dans la mémoire réservée.

D'autres caractéristiques et avantages apparaîtront plus clairement à la lecture de la description qui suit et à l'examen des figures qui l'accompagnent parmi lesquelles :
- la figure 1 présente un dispositif électronique de stockage selon l'invention ;
- la figure 2 présente l'adaptation de la capacité d'accès à la mémoire de masse d'un dispositif de stockage selon l'invention ;
- la figure 3 décrit la structure logique d'un plan de la mémoire de masse d'un dispositif électronique de stockage ;
- la figure 4 présente les structures de données exploitées pour gérer la mémoire de masse d'un dispositif électronique de stockage.

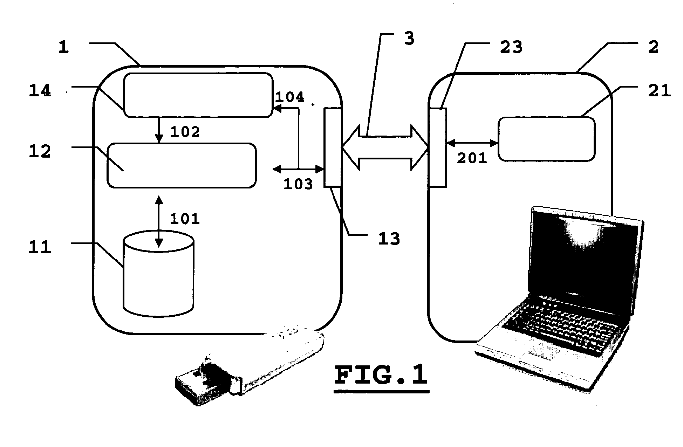

La figure 1 présente un dispositif électronique de stockage 1 selon l'invention. Ce dispositif 1 est en liaison avec un équipement hôte 2, illustrés respectivement et à titre d'exemple, par une clé USB et par un ordinateur portable. L'équipement hôte 2 dispose notamment d'une plateforme logicielle 21 et de moyens de communication 23. La plateforme logicielle 21 peut être le système d'exploitation « Windows » éditée par Microsoft ou bien « Linux OS » ou encore « MAC OS » pour un ordinateur « Apple computer » ou tout autre système d'exploitation. Les moyens de communication 23 permettent d'établir une communication supportant par exemple le protocole USB ou tout autre type de communication. Les moyens pourraient également assurer une communication sans contact de type Bluetooth®, WiFi etc.

Les autres moyens logiciels et matériels (unité de traitement, mémoires...) mis en oeuvre par l'équipement hôte 2 ne sont pas représentés sur la figure 1, pour favoriser la lisibilité.

Le dispositif électronique de stockage 1 comporte une mémoire de masse 11 accessible en lecture/écriture depuis l'équipement hôte 2 au moyen d'un contrôleur d'accès 12. Il comporte en outre des moyens de communication 13 permettant d'établir une communication avec l'équipement hôte. A titre d'exemple, les moyens 13 assurent une communication au moyen du protocole de communication USB. Les moyens de communication 13 du dispositif 1 pourraient également assurer une communication filaire ou sans contact. Pour assurer une communication avec le dispositif 1, l'équipement hôte 2 initie la communication par une série de commandes pour notamment reconnaître le type de dispositif 1, sa configuration logicielle et/ou matérielle.

Dans le cas d'une communication utilisant le protocole USB, les commandes consiste notamment à :
- initialiser le bus de communication;
- demander un descripteur du dispositif;
- configurer ledit dispositif...

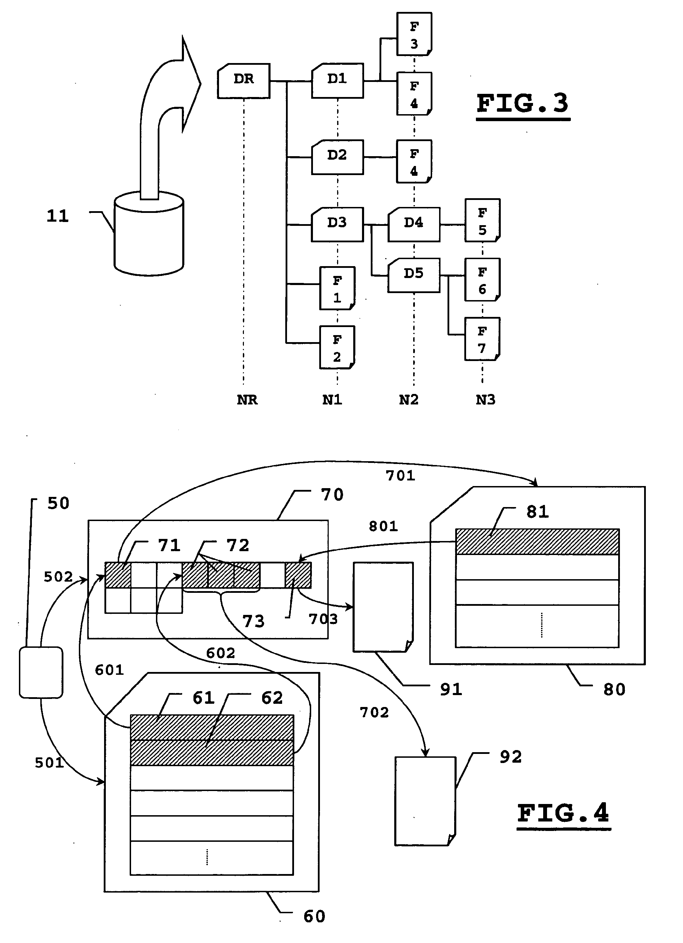

Dans le cas présenté en liaison avec la figure 1, un dispositif 1 tel une clé USB ne peut interpréter une structure logique de répertoires et fichiers comme celle illustrée par la figure 3. Le dispositif 1 offre (via le moyen contrôleur 12) des services de lecture et/ou d'écriture par blocs de mémoire. Seul l'équipement hôte 2 peut interpréter une structure mémoire logique telle qu'illustrée par la figure 3.

La figure 3 présente en effet un exemple de structure arborescente de fichiers F1 à F8 regroupés au moyen de répertoires DR, D1 à D5. Le contenu d'une mémoire de masse (telle la mémoire 11 d'un dispositif de stockage en liaison avec la figure 1) peut être représenté à l'aide d'une vue arborescente à plusieurs niveaux de hiérarchie NR, N1, N2 et N3. Le répertoire principal ou répertoire racine est DR. Il regroupe les fichiers F1 et F2 ainsi que trois autres répertoires de niveau N1 : D1, D2 et D3. Le répertoire D1 groupe les fichiers F3 et F4. Le répertoire D2 contient un fichier unique F5. Le répertoire D3 (de même niveau N1 que D1 et D2) groupe deux répertoires de niveau inférieur N2 : D4 et D5. A leur tour les répertoires D4 et D5 groupent respectivement le fichier F6 et les fichiers F7 et F8. A l'aide de ce type de représentation, le contenu d'une mémoire est traditionnellement organisé. Les données d'un utilisateur d'un dispositif électronique sont donc réparties et classées.

La figure 4 permet de décrire un mode de réalisation connu permettant de matérialiser une structure logique d'une mémoire 11 décrite en liaison avec la figure 3. Le mode de réalisation est un système de fichiers FAT (*File Allocation Table*). Ce type de système peut-être considéré comme universel. En effet, les systèmes d'exploitation actuellement développés tels « Windows », « Linux OS » reconnaissent ce système de fichiers.

Selon ce système la mémoire 11 comprend traditionnellement quatre zones : une zone réservée 50, une zone 70 dédiée à une table d'allocation de fichiers, une zone 60 dédiée au répertoire racine et une zone pour contenir fichiers et répertoires. La zone réservée 50 comporte l'adresse 501 notamment du répertoire racine DR. Cette adresse est codée directement ou indirectement. En effet la zone réservée peut alternativement contenir la taille de la zone 70' qui suit immédiatement la zone réservée. Le répertoire racine étant la structure mémoire suivant immédiatement la table 70, il est ainsi possible de déduire indirectement l'adresse du répertoire racine 60. L'adresse 502 de la zone de la table 70 peut également être déduite indirectement. Ceci est le cas notamment si la zone mémoire 70 suit immédiatement la zone 50 réservée. Si ces zones de mémoire ne sont pas adjacentes, l'adresse 502 peut être explicitement écrite dans la mémoire réservée 50.

La table 70 permet de configurer l'espace mémoire utilisable pour les fichiers et répertoires. Il existe une entrée 71, 72, 73 pour chaque unité élémentaire ou *cluster* de la mémoire de fichiers. Une entrée peut contenir une valeur pour indiquer:
- que le cluster est inutilisé ;
- que le cluster est réservé ;
- que le cluster est endommagé ;
- que le cluster est le dernier cluster d'un fichier ;
- le cluster suivant d'un fichier.

Ainsi lorsqu'un fichier F1 à F8 est créé, la plateforme logicielle 21 alloue des clusters pour constituer le fichier en cherchant dans la table 70 des clusters inutilisés. La plateforme met à jour ladite table 70 pour matérialiser les clusters 702 ou 703 associés au fichier 91 ou 92.

Le répertoire racine 60 est utilisé comme une table des matières. Il permet d'identifier les fichiers et répertoires de niveau N1. Chaque entrée 61, 62 comporte notamment le nom du fichier ou répertoire de niveau N1, sa taille et son emplacement dans la mémoire. Pour cela une entrée 61 ou 62 du répertoire racine 60, comporte l'adresse ou le numéro de la première entrée dans la table 70 associée au fichier ou au répertoire. Ainsi l'entrée 62 permet d'indiquer 602, la première entrée 71 dans la table 70. Les répertoires de niveau N1 ou N2 disposent chacun d'une structure 80 similaire à celle 60 du répertoire racine. La structure 80 d'un répertoire est stockée dans la zone de mémoire des fichiers et répertoires. Une entrée 71 dans la table d'allocation 70 est ainsi associée 701 à un répertoire. A son tour la structure 80 comporte une ou plusieurs entrées 81 associées chacune à un fichier 91 ou répertoire de niveau inférieur.

Selon l'art antérieur, peuvent être classées:
- les données spécifiques à la plateforme « Windows » sous le répertoire D1 ;
- les données spécifiques à la plateforme « Linux OS » sous le répertoire D2 ;
- les données communes sous le répertoire D3.

Toutefois une telle répartition ne permet pas de s'affranchir d'une mauvaise sélection par l'utilisateur. Bien que le nom du répertoire D1 (ou un fichier d'aide F1) décrive le mode opératoire pour installer une application compatible avec une plateforme « Windows », l'utilisateur peut malencontreusement choisir d'installer un programme (stocké sous D2) compatible avec « Linux OS ». L'installation sera inefficace et l'utilisateur mécontent.

L'invention résout les inconvénients des solutions antérieures en masquant à la plateforme 21 (donc à l'utilisateur) les répertoires contenant des applications non compatibles ou des données non pertinentes. Pour cela, les données et applications sont classées comme nous l'avons vu selon la technique antérieure :
- les données spécifiques à la plateforme « Windows » sous un répertoire D1 ;
- les données spécifiques à la plateforme « Linux OS » sous un répertoire D2 ;
- les données communes sous un répertoire D3.

Le dispositif 1 selon l'invention comporte outre la mémoire de masse 11 et un moyen 12 pour contrôler l'accès à la mémoire 11, un moyen identificateur 14 pour identifier une plateforme logicielle 21 disponible au sein de l'équipement hôte 2.

Pour identifier la plateforme 21, le moyen identificateur 14 peut analyser la série de commandes transmises depuis l'équipement hôte 2 lors de la mise en liaison du dispositif 1 et de l'équipement hôte 2.

Si nous prenons l'exemple du protocole USB pour illustrer l'étape d'identification, nous avons vu que les commandes consistent à :
- initialiser le bus de communication;
- demander un descripteur du dispositif;
- configurer ledit dispositif...

Dans le cas d'une plateforme 21 « Windows » ces commandes se traduisent (en langue anglaise) par les instructions de programme:
1) Bus Reset (notée « R »);
2) Get Device Descriptor (notée « D »);
3) Bus Reset (notée « R »);
4) Get Device Descriptor (notée « D »);
5) Set Address (notée « A »)
6) Set Configuration (notée « C »)
7) ...

Nous pouvons noter schématiquement « RDRDAC » pour caractériser cette séquence d'instructions.

Dans le cas d'une plateforme 21 de type « Linux OS » seules sont transmises les instructions:
1) Bus Reset (notée « R »);
2) Get Device Descriptor (notée « D »);
3) Set Address (notée « A »)
4) Set Configuration (notée « C »)
5) ...

La séquence peut de même être notée « RDAC ».

Nous pourrions prendre d'autres exemples (« Mac OS », etc.) pour illustrer le fait que la séquence d'instructions permettant d'initialiser la communication est en quelque sorte une signature de la plateforme 21, signature que peut exploiter le moyen identificateur 14 du dispositif 1 selon l'invention.

En variante, l'identification réalisée par le moyen 14 peut être plus complexe et nécessiter une analyse plus complète de ces mêmes commandes. Une machine d'états peut par exemple être mise en oeuvre par le moyen identificateur 14 pour réaliser la fonction d'indentification. D'autres mécanismes pourraient être imaginés utilisant d'autres caractéristiques émanant de l'équipement hôte 2.

Pour résoudre les inconvénients des solutions connues, le dispositif 1 selon l'invention comporte en outre un moyen 12 contrôleur d'accès à la mémoire 11, modifié pour adapter automatiquement la capacité d'accès 11a en lecture et/ou écriture à la mémoire 11 depuis l'équipement hôte en fonction de la plateforme identifiée par le moyen identificateur 14.

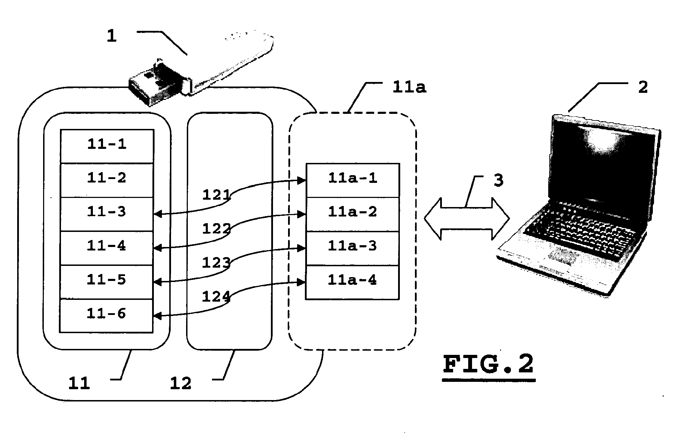

La figure 2 présente un dispositif 1 dont la mémoire 11 contient :
- une partie 11-1 de la table d'allocation 70 dédiée à des données pertinentes uniquement pour une plateforme 21 « Windows », lesdites données 11-2 ;
- une partie 11-3 de la table d'allocation 70 dédiée à des données pertinentes uniquement pour une plateforme 21 « Linux OS », lesdites données 11-4 ;
- une partie 11-5 de la table d'allocation 70 dédiée à des données communes à toute plateforme 21, lesdites données 11-6.

Le dispositif 1 selon l'invention présente ainsi à un équipement hôte 2, ordinateur portable muni d'une plateforme 21 « Linux OS », une capacité d'accès 11a réduite et dédiée. Pour cet équipement hôte 2 sont disponibles uniquement :
- 11a-1 et 11a-2 correspondant respectivement à la partie 11-3 de la table d'allocation 70 dédiée à des données pertinentes uniquement pour une plateforme 21 « Linux OS » et auxdites données 11-4 ;
- 11a-3 et 11a-4 correspondant respectivement à la partie 11-5 de la table d'allocation 70 dédiée à des données communes à toute plateforme 21, lesdites données 11-6.

Pour pouvoir présenter les éléments uniquement pertinents pour une plateforme, un premier mode de réalisation consiste à prévoir dans la mémoire dédiée au répertoire racine 60 (voir figure 4) autant de structures 61, 62 que de plateformes susceptibles d'être en liaison avec le dispositif électronique de stockage. Ainsi pour un dispositif électronique comprenant des données et/ou programmes spécifiques à deux plateformes (« Windows », et « Linux OS » par exemple), il est prévu dans la mémoire 60 :
1) un répertoire racine comportant:
   a. une entrée dédiée à un répertoire D1 contenant des données et/ou programmes pertinents uniquement pour une plateforme « Windows » ;
   b. une entrée dédiée à un répertoire D3 contenant des données communes à toute plateforme ;
   c. éventuellement une ou plusieurs entrées dédiée(s) à un ou des fichiers d'aide ou de promotion pour installer des programmes spécifiques à un équipement hôte muni d'une plateforme « Windows » ;
2) un répertoire racine comportant :
   a. une entrée dédiée à un répertoire D2 contenant des données et/ou programmes pertinents uniquement pour une plateforme « Linux OS » ;
   b. une entrée dédiée à un répertoire D3 contenant des données communes à toute plateforme ;
   c. éventuellement une ou plusieurs entrées dédiée(s) à un ou des fichiers d'aide ou de promotion pour installer des programmes spécifiques à un équipement hôte muni d'une plateforme « Linux OS ».

Il est également prévu dans la mémoire réservée 50, d'associer un point d'entrée ou adresse spécifique à chacun des deux répertoires racines de la mémoire 60.

Ainsi, après la phase d'identification réalisée par le moyen identificateur 14, le moyen 12 contrôleur d'accès utilise le point d'entrée ou adresse relative au répertoire racine pertinent au regard de la plateforme 21 identifiée. Ainsi les données et/ou programmes spécifique à une autre plateforme sont inaccessibles.

Selon un autre mode de réalisation, les différentes versions de répertoire racine sont stockées dans la mémoire réservée. Dans ce mode de réalisation, chaque structure comporte un identificateur distinctif. Le moyen contrôleur 12 copie dans la mémoire 60 la structure pertinente en fonction de la plateforme identifiée.

En variante, seule une version complète du répertoire racine est stockée dans la mémoire réservée. La structure du répertoire racine en mémoire 60 est générée lors de la mise en liaison, par le moyen contrôleur 12 à la suite de l'étape d'identification de la plateforme. Pour cela ledit moyen exploite un identifiant distinctif contenu dans chaque entrée 61, 62 du répertoire racine stocké en mémoire réservée et ne copie que les entrées pertinentes à la plateforme identifiée. Les entrées correspondent aux données spécifiques à la plateforme et aux données communes.

D'autres modes de réalisation pourraient être imaginés. Les réalisations précédemment décrites ne sauraient être limitatives au regard de l'invention.

Ainsi, prenons comme exemple un dispositif électronique selon l'invention comportant un serveur de contenus. Ce dispositif pourrait comporter :
- un moyen de communication 13 de type USB ;
- une mémoire de stockage 11 (contenant les données du serveur), et un moyen fonctionnel 12 mettant en oeuvre le serveur (complété par exemple par un serveur FTP (*File Transfer Protocol*) et un serveur de « streaming » pour diffuser du contenu).

Le moyen identificateur 14 ayant détecté une plateforme logicielle, signale au serveur 12, qui, pour une même requête émanant de l'équipement 2, retourne des données différentes selon la plateforme 21 identifiée. Considérons que le serveur mette à disposition un programme exécutable à télécharger puis à exécuter sur l'équipement hôte, une page « Web » d'aide à l'installation et une page « Web » décrivant la licence d'utilisation du logiciel.

Le programme ou les programmes mis à disposition dépend(ent) de la plateforme 21. Pour mettre en oeuvre l'invention, le serveur 12 exploite par exemple une table 50 de références à des ressources dédiées aux plateformes concernées. Pour détecter la plateforme 21, le moyen identificateur 14, exploite la requête émise par le navigateur de l'équipement 2 pour identifier la plateforme 21 de l'équipement hôte 2.

Un autre exemple de mise en oeuvre de l'invention, concerne une carte SIM 1, avec un support 13 USB qui peut donc être utilisée dans un téléphone ou un ordinateur via une liaison de type USB. L'opérateur qui distribue une telle carte peut restreindre l'utilisation de certaines applications contenues dans la carte au monde du téléphone et d'autres au monde de l'ordinateur.

La carte 1 comporte ainsi un moyen identificateur 14 pour détecter la plateforme 21 de l'équipement hôte 2 (ordinateur ou téléphone).

D'autres exemples de réalisation ou d'utilisation de l'invention pourraient être imaginés ou considérés.

En outre comme le décrit la figure 1, les moyens identificateur 14 et gestionnaire 12 peuvent être dissociés. Dans un mode de réalisation préféré, le moyen identificateur 14 fait partie intégrante du moyen contrôleur 12 d'accès à la mémoire de stockage 11 d'une clé USB ou du serveur 12 d'un dispositif comportant un serveur contenus accessibles via un navigateur.

## Revendications

1. Dispositif électronique (1) présentant un ou plusieurs services, comportant :
- des moyens de communication (13) pour permettre une liaison avec un équipement hôte (2) ;
- un moyen (12) pour gérer et mettre à disposition de l'équipement hôte (2), le ou lesdits services
**caractérisé en ce que :**
- le dispositif (1) comporte en outre un moyen identificateur (14) pour identifier une plateforme logicielle (21) disponible au sein de l'équipement hôte (2);
- et **en ce que** le moyen (12) pour gérer les services adapte automatiquement la capacité d'accès (11a) auxdits services depuis l'équipement hôte en fonction de la plateforme identifiée par le moyen identificateur (14).

2. Dispositif électronique selon la revendication 1 comportant une mémoire (11) de masse pour contenir des données et/ou un programme et dans lequel le moyen (12) pour gérer les services consiste en un moyen (12) contrôleur d'accès en lecture et/ou écriture de ladite mémoire apte à adapter automatiquement la capacité d'accès (11a) en lecture et/ou écriture à la mémoire (11) depuis l'équipement hôte en fonction de la plateforme identifiée par le moyen identificateur (14).

3. Dispositif selon la revendication 1 ou 2, dans lequel le moyen identificateur (14) fait partie intégrante du moyen pour gérer les services (12).

4. Dispositif selon l'une quelconque des revendications 1 à 3, dans lequel le moyen identificateur (14) exploite certaines données (104) échangées avec l'équipement hôte (2) pour identifier la plateforme (21).

5. Dispositif selon la revendication 4, dans lequel les données exploitées (104) sont issues de commandes d'initialisation de la communication entre le dispositif (1) et l'équipement hôte (2).

6. Dispositif selon l'une quelconque des revendications 1 à 5, dans lequel les moyens pour gérer les services (12) exploitent en outre une mémoire réservée (50) pour référencer les services autorisés pour une plateforme (21) donnée.

7. Dispositif selon la revendication 6, dans lequel les moyens pour gérer les services (12) exploitent une mémoire (60) pour lister les services autorisés pour une plateforme (21) donnée et dans lequel la référence (501) à ladite mémoire (60) est contenue dans la mémoire réservée (50).

8. Dispositif selon la revendication 6, dans lequel les moyens pour gérer les services (12) exploitent en outre une mémoire (60) pour lister les services autorisés pour une plateforme (21) donnée et ce que le contenu de ladite mémoire (60) est élaboré par lesdits moyens (12) à partir de données mémorisées dans la mémoire réservée (50).
